# EUROPEAN PATENT SPECIFICATION

(11) **EP 3 566 932 B1**
(45) Date of publication and mention of the grant of the patent: **23.06.2021**
(21) Application number: 19460025.0
(22) Date of filing: 11.05.2019
(51) Int. Cl.: B62D 53/08

(54) **FIFTH WHEEL PLATE**
SATTELKUPPLUNGSPLATTE
PLAQUE DE SELLETTE D'ATTELAGE

(30) Priority: 11.05.2018 PL 42550518
(43) Date of publication of application: 13.11.2019
(73) Proprietor: "WIELTON" Spolka Akcyjna, 98-300 Wielun (PL)
(72) Inventor: Tomasik, Piotr, 42-450 Niegowonice (PL); Januszka, Marcin, 44-122 Gliwice (PL); Kocybik, Sebastian, 42-680 Tarnowskie Góry (PL); Korbel, Kazimierz, 42-600 Tarnowskie Góry (PL)
(74) Representative: AOMB Polska Sp. z.o.o.

(56) References cited:
- EP-A1- 0 211 417
- CN-U- 206 374 851
- PL-B1- 222 264
- US-A- 1 205 532
- US-A- 2 846 235

## Description

The invention relates to a skid plate, constituting one of the cooperating components of a semi-trailer, which enable it to be connected to a truck tractor and a fifth wheel with which the tractor is equipped. The structure provided herein is universal and can be used in semi-trailers of various types.

There are many types of tractors and many semi-trailer solutions. And so they are for example: curtain sided trailers, box trailers, container trailers, or specialist semi-trailers such as tanker semi-trailers and tipper semi-trailers.

Regardless of the type of semi-trailer, each of them works together with a truck tractor during their operation and it is necessary to ensure an efficient coupling of the two road vehicles. A component enabling the combination of a semi-trailer with a truck tractor is the fifth wheel with which the tractor is equipped. After coupling the two vehicles, a part of the semi-trailer's weight is transferred to the semi-trailer tractor and its fifth wheel. At the same time, the fifth wheel makes it possible to turn the semi-trailer with respect to the tractor during their movement and, thanks to the pivotal connection, such units maintain a relatively small turning radius in spite of their considerable length.

The semi-trailer is coupled in the fifth wheel of the truck tractor with its front part equipped with appropriate devices enabling the coupling of both vehicles.

And so: the semi-trailer has a supporting frame (constituting the semi-trailer chassis). In the front part of the semi-trailer frame, from its bottom side, a connection area of the semi-trailer to the truck tractor can be identified, hereinafter referred to as the "front panel", whose essential part is called a coupler plate or a skid plate.

The front section of the frame, called the "swan neck", where the skid plate is located, is usually lowered towards the front of the semi-trailer.

These components are responsible for connection of the semi-trailer to the truck tractor during the cooperation of both road vehicles. Therefore, the appropriate execution of the skid plate can have an essential impact on durability, driveability, and thus also on the safe operation of a semi-trailer truck in the road traffic.

In the front panel of the semi-trailer, in the skid plate mounted in its lower part, wherein the skid plate facilitates the sliding of the semi-trailer on the surface of the fifth wheel during the coupling manoeuvre, a pin called a "king pin" is located, and is responsible for the articulated joint of the semi-trailer with a tractor.

The known front panel with the structure shown above is made of steel sheet (which is the basic material from which the skid plate is usually made) and a significant number of sections with various cross-sections (angle sections, tee sections, I-sections), flat bars and also hollow section components.

Thus, the consequence of different existing types of tractors and semi-trailers is also a diversity of types of skid plates, whose designs depend on their purpose.

Therefore, the manufacturing process of the known front panels of semi-trailers is currently complex and expensive. The process must now take into account, in each case, the specificity of a given semi-trailer tractor. For example, in bimodal transport, road semi-trailers are coupled with railway bogies through special coupling assemblies. For this reason, the semi-trailers must be equipped with appropriate connecting components that cooperate with coupling components of coupling assemblies.

A Polish patent specification P.354136 (BUP (Bulletin of the Patent Office) publication date 2003-12-29) discloses a solution known as a "Fifth wheel coupling". The invention describes a fifth wheel coupling, in which a skid plate is used. The fifth wheel coupling has a manually actuable release arm which engages with the plate in a position in which the locking member is retracted to allow the king pin to be released (or entered), and also in a position in which the member holds the locking jaw in the king pin locking position. A piston of a piston and cylinder arrangement connected to the release arm causes the release arm to be moved, against spring bias, to the first (released) position, wherein a plunger on the release arm is used to actuate the switch which operates the piston.

Another Polish patent specification PL.222264 (application number P.396472, publication date BUP 2013-04-02) discloses a solution called "Semi-trailer". The design described therein comprises a support frame which essentially consists of two side members. The support frame is mounted on a set of road wheels. It is provided in the front part with a front panel that includes a coupling plate and extensions of the frame side members. The front panel is made of a skid plate spatially formed by bending and a front reinforcement forming a coupling plate, which are mounted in the frame side members. The front panel skid plate includes longitudinal reinforcing ribs and together with them forms a single component spatially formed by bending. The disclosed invention presents a semi-trailer design that can be manufactured accurately, in a simple and cheap way.

Yet another Polish patent specification PL.171906 (application number P.396472, publication date BUP 2013-04-02) discloses a solution called "Bogie's central coupling assembly for attaching truck-tractor semi-trailers in bimodal transport system". The disclosed coupling assembly is characterized in that it is made of a lower adapter having a ball pin mounted in a ball seat of the bogie, and above the ball pin in its vertical axis it has a ball seat in which the ball pin of the upper adapter is mounted. Each of the adapters has, in the longitudinal axis, a horizontal hook directed outwards, while the lower adapter is equipped with symmetrically arranged two parallel locking bolts set longitudinally and extended before the hook. The upper adapter is equipped with two symmetrically spaced open handles on the hook side.

CN206374851U discloses a skid plate comprising on its upper surface two transverse beams, two longitudinal beams, and plurality of reinforcements in a form of arched ribs arranged substantially around a central pinhole.

European patent application EP0211417 discloses a semi-trailer with a skid plate according to the preamble of claim 1. The arrangement for receiving a fifth-wheel kingpin disclosed therein comprises a skid plate assembly comprising a pin, the skid plate being formed with profiles in form of ribs and embossments, wherein the profiles serve as reinforcements. The arrangement consists of two plates of which at least one has said profiles, and which are arranged on top of one another in such a way that stiffening is produced in all directions.

In known solutions, the skid plates require reinforcing and stiffening of their structures. Usually, as illustrated above, the skid plate structure is stiffened with a part of the semi-trailer's frame structure. Such reinforcements are, however, adapted to a plate of specific structure, and thus a particular skid plate is adapted to the structure of a corresponding type of semi-trailer with a specified maximum permissible load on the pin. The object of the present invention is to provide a universal skid plate, the shape of which will ensure its adequate strength, which will not require reinforcement with an additional structure, and which can be used in semi-trailers of various types. The object of the invention is thus to provide a skid plate that will act as a sliding surface when manoeuvring the tractor to couple to semi-trailer and will facilitate an efficient coupling of each truck tractor to each semi-trailer.

According to the present invention there is provided a semi-trailer with a skid plate comprising:
a pin extending from the bottom of the skid plate, the pin to be mounted in a fifth wheel of a tractor coupled to the semi-trailer,
reinforcements in a form of ribs and embossments formed in an area of monolithic, bent surfaceof the skid plate,
wherein the skid plate is formed by an area of appropriately contoured surface, preferably made of steel, so as to form:
   circumferential ribs running substantially symmetrically with respect to a longitudinal direction of the semi-trailer and on both sides of a central and substantially flat surface, and
   a central longitudinal embossment made in the central and substantially flat surface, wherein the longitudinal embossment runs exactly through the centre of the surface and constitutes the symmetry axis for the ribs, said embossment running substantially parallel to the longitudinal direction of the semi-trailer through the centre of the surface and in an area of the pin, so that in the place where the pin is located, the longitudinal embossment is flattened.

The circumferential ribs and/or the central longitudinal embossment are made in the surface using the plastic forming methods, preferably the hydroforming method.

The circumferential ribs are elliptic.

In the longitudinal embossment of the skid plate, a lubricant is placed to reduce the friction between the semi-trailer skid plate and/or between its pin and the fifth wheel of the semi-trailer tractor.

The solution according to the invention, thanks to the technology in which it is made, allows an easy and arbitrary forming of the shape of the skid plate. At the same time, the shape of the skid plate provided herein makes it rigid to the extent that it is not necessary to reinforce it additionally by a part of the semi-trailer frame structure (as is the case in the above described solutions from the prior art, e.g. in the patented invention PL.222264, application number P.396472). At the same time, an indirect, uniform distribution of the trailer's load on the semi-trailer tractor's fifth wheel via the king pin is obtained. In a semi-trailer, where the skid plate provided herein will be used, it will sufficiently strengthen the semi-trailer structure and adapt it for mounting (coupling) in each semi-trailer tractor with an appropriate type of the fifth wheel.

The hydroformed skid plate is shaped in a way that optimizes its contact surface with the fifth wheel of the semi-trailer tractor. The optimization of the friction faces allowed reducing the wear of components and extending the service life of the semi-trailer coupling assembly with the tractor.

The structure provided herein protects additionally the king pin that is constantly subjected to operational loads in various directions, as it allows for distribution of a self-dispensing lubricant stored in a pocket formed by the longitudinal ribbing that reduces the friction between the semi-trailer plate and possibly also between the pin and the fifth wheel of the semi-trailer tractor.

On the other hand, making the manufacturing process of the skid plate independent of the manufacturing process of the structure frame of a semi-trailer truck facilitates, accelerates and reduces the cost of the manufacturing process of the complete frame of the semi-trailer.

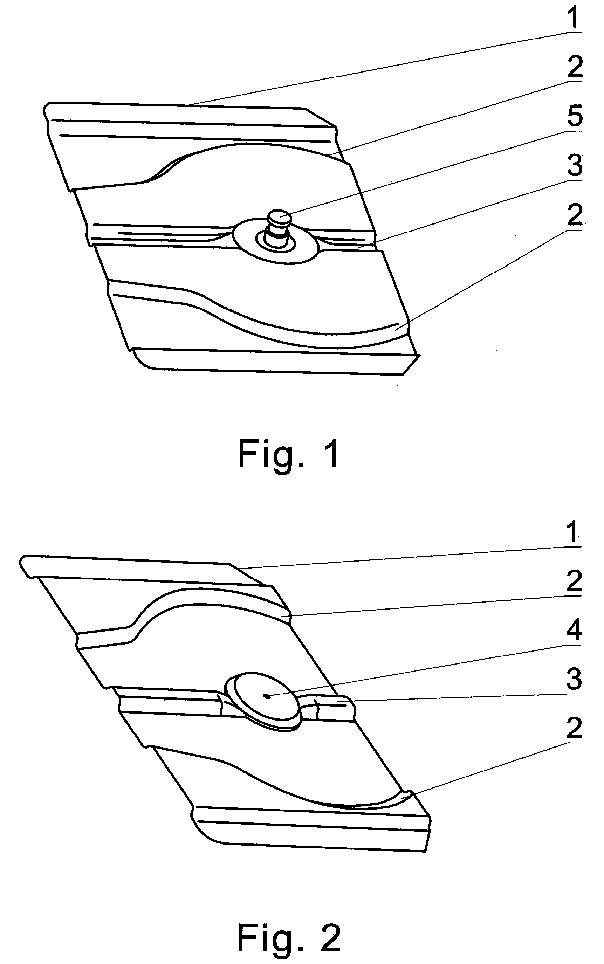

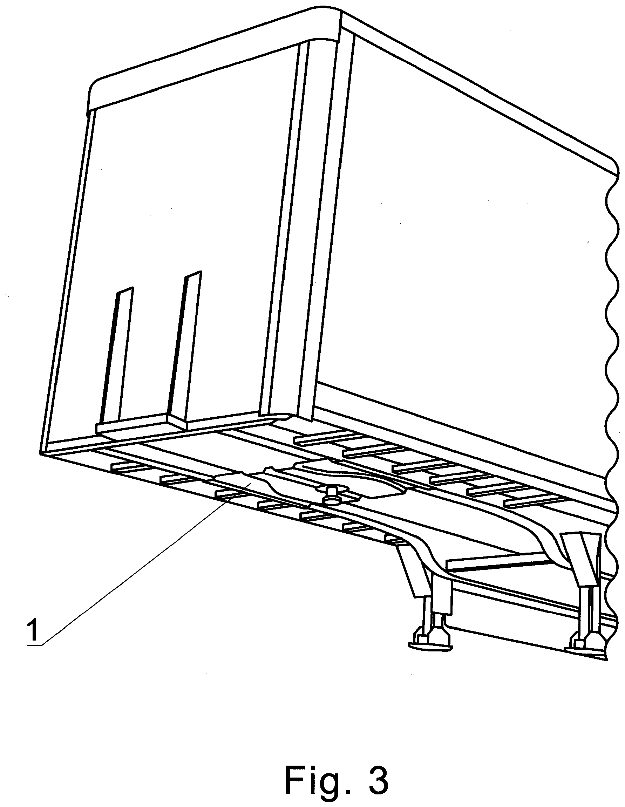

The object of the invention is illustrated in more detail in an embodiment in the drawings, Fig. 1 - shows an axonometric view of the inverted skid plate with a king pin lead out from it, which the king pin in the normal position of the skid plate is lead out downwards and adapted for mounting in the fifth wheel of the truck, Fig. 2 - shows an axonometric view of the skid plate in the top view, while Fig. 3 shows the semi-trailer in the bottom view and illustrates the areas of use and the rules of use of the skid plate.

As shown in the drawings, the skid plate 1 is formed by an area of a bent and monolithic surface, appropriately contoured, which can be made of various materials with high strength properties, preferably of high-grade metal sheets and materials of similar strength level. Said skid plate 1 has circumferential ribs 2 and a central, longitudinal embossment 3, which improve the bending strength of the skid plate 1, increase its stiffness and facilitate the execution of manoeuvres including for example:
- the coupling of a semi-trailer with a semi-trailer tractor, preferably with a truck tractor,
- the turnover of the semi-trailer and the semi-trailer tractor when turning or turning back,
- the distribution of a self-dispensing lubricant stored in a pocket formed by the longitudinal central embossment 3 that reduces the friction between the semi-trailer plate (and possibly also its pin 5) and the fifth wheel of the semi-trailer tractor.

The ribs 2 and the longitudinal embossment 3 made in the surface of the skid plate 1, most preferably shaped by the hydroforming method, allow for an easy manoeuvring for coupling the semi-trailer with the tractor, as the shape of the ribs 2 is elliptical and an appropriate contouring of the surface of the hydroformed skid plate 1 makes the surface to act also as a skid when performing a coupling manoeuvre.

The ribs 2 are made in such a way as to optimize the contact face of the skid plate 1 with the tractor's fifth wheel.

The implementation of a new method of forming the skid plate 1 enabled the optimization of the size of the most favourable contact area of the skid plate surface with the fifth wheel surface in terms of their cooperation during normal use. The skid plate 1 provided herein is easily, in a planned way adapted to the shape of the fifth wheel and is compatible with it.

The longitudinal embossment 3 runs exactly through the centre of the surface 1 and constitutes the symmetry axis for the ribs 2. Thus, the centre 4 of the elliptical shape of the ribs 2 in the surface of the skid plate 1 is located in the space of the longitudinal embossment 3. At the centre 4 of the hydroformed skid plate, there is located a pin 5, a so-called "king pin", which is mounted in the fifth wheel of a semi-trailer tractor.

The longitudinal embossment 3 made in the area of the surface of the skid plate 1 improves the strength properties of the surface of the skid plate 1, but at the same time it must be suitably fabricated, as the longitudinal embossment 3 improves the stiffness of the skid plate 1 and supports the components above the plate, constituting in some way a pocket in which a self-dispensing lubricant can be placed and used to reduce the friction between the hydroformed skid plate 1 of the semi-trailer (and possibly also the friction between its pin 5) and the fifth wheel of the semi-trailer tractor. During normal semi-trailer operation, the connection between the skid plate 1 and the tractor's fifth wheel should be regularly lubricated in order to avoid seizure of the connection. The implementation of the longitudinal embossment 3 allows for accumulation of some reserve of the lubricant, which under its own weight will fall gravitationally and automatically lubricate the connection, whereby the maintenance intervals related to lubricating the connection will be extended. The contoured surface of the skid plate 1 distributes appropriately and uniformly the loads acting on the fifth wheel of the trailer tractor.

The king pin 5 is joined to the surface of the skid plate 1 and is made, similarly as the skid plate 1, of a material with high strength properties, wherein the pins 5 are available and known and fabricated for example from steel. In the place where the king pin 5 is located, the longitudinal embossment 3 is flattened.

The fabrication of such a surface of the skid pate 1 with ribs 2 and longitudinal embossment 3, which is flattened in the area the surface is joined to the king pin 5, is possible with the use of, for example, hydroforming technology or pressing, hot-forming, forging and the like, to fabricate the surface.

This technology consists in mapping a specific form shape by pressing metal sheet into it using a flexible press tool. An advantage of this type of solution is the ability to easily obtain a complex, spatial shape of metal sheet that improves the stiffness of the metal sheet, and thus allows obtaining the surface of the hydroformed skid plate with new properties.

A hydroformed skid plate fabricated in this way is sufficiently rigid and durable and at the same time allows the semi-trailer to be effectively coupled with the truck tractor.

### List of reference signs in the Drawings:

1. skid plate;
2. rib;
3. embossment (longitudinal);
4. centre;
5. (king) pin.

## Claims

1. A semi-trailer with a skid plate (1), said skid plate (1) comprising
a pin (5) extending from the bottom of the skid plate (1), the pin (5) to be mounted in a fifth wheel of a tractor coupled to the semi-trailer,
wherein reinforcements in a form of ribs (2) and embossments (3) are formed in an area of a monolithic, bent surface of the skid plate (1),
**characterized in that**
the skid plate (1) is formed by an area of appropriately contoured surface, preferably made of steel, so as to form
circumferential ribs (2) running substantially symmetrically with respect to a longitudinal direction of the semi-trailer and on both sides of a central and substantially flat surface, and
a central longitudinal embossment (3) made in the central and substantially flat surface, wherein the longitudinal embossment (3) runs exactly through the centre of the surface and constitutes the symmetry axis for the ribs (2), said embossment (3) running substantially parallel to the longitudinal direction of the semi-trailer through the centre (4) of the surface and in an area of the pin (5), so that in the place where the pin (5) is located, the longitudinal embossment (3) is flattened.

2. The semi-trailer according to claim 1, **wherein** the circumferential ribs (2) and/or the central longitudinal embossment (3) are made in the surface with plastic forming methods, preferably by hydroforming.

3. The semi-trailer according to claim 1 or 2, **wherein** the circumferential ribs (2) are elliptical.

4. The semi-trailer according to claims 1 or 2 or 3, **wherein** a lubricant is placed in the longitudinal embossment (3) to reduce the friction between the skid plate (1) and/or between the pin (5) and the fifth wheel of the tractor.

## Patentansprüche

1. Sattelanhänger mit einer Gleitplatte (1), wobei die Gleitplatte (1) einen Königszapfen (5) aufweist, der sich von der Unterseite der Gleitplatte (1) erstreckt, wobei der Königszapfen (5) in einem Sattelkupplung einer an den Sattelanhänger gekoppelten Zugmaschine zu montieren ist,
wobei in einem Bereich einer monolithischen, gebogenen Oberfläche der Gleitplatte (1) Verstärkungen in Form von Rippen (2) und Prägungen (3) ausgebildet sind,
**dadurch gekennzeichnet, dass**
die Gleitplatte (1) durch einen Bereich mit geeignet konturierter Oberfläche, vorzugsweise aus Stahl, gebildet ist,
um Umfangsrippen (2) zu bilden, die im Wesentlichen symmetrisch in Bezug auf eine Längsrichtung des Sattelanhängers und auf beiden Seiten einer zentralen und im Wesentlichen flachen Oberfläche verlaufen, und
eine zentrale Längsprägung (3), die in der zentralen und im Wesentlichen flachen Oberfläche ausgebildet ist, wobei die Längsprägung (3) genau durch die Mitte der Fläche verläuft und die Symmetrieachse für die Rippen (2) bildet, wobei die Prägung (3) im Wesentlichen parallel zur Längsrichtung des Sattelanhängers durch die Mitte (4) der Fläche und in einem Bereich des Königszapfens (5) verläuft, so dass an der Stelle, an der sich der Königszapfen (5) befindet, die Längsprägung (3) abgeflacht ist.

2. Sattelanhänger nach Anspruch 1, **wobei** die Umfangsrippen (2) und/oder die zentrale Längsprägung (3) mit plastischen Umformverfahren, vorzugsweise durch Hydroforming, in die Oberfläche eingebracht sind.

3. Sattelanhänger nach Anspruch 1 oder 2, **wobei** die Umfangsrippen (2) elliptisch sind.

4. Sattelanhänger nach Anspruch 1 oder 2 oder 3, **wobei** in der Längseinprägung (3) ein Schmiermittel zur Reduzierung der Reibung zwischen der Gleitplatte (1) und/oder zwischen dem Königszapfen (5) und der Sattelkupplung der Zugmaschine eingebracht ist.

## Revendications

1. Une semi-remorque avec une plaque de glissement (1), ladite plaque de glissement (1) comprenant
un pivot d'attelage (5) s'étendant depuis le fond de la plaque de glissement (1), le pivot d'attelage (5) destinée à être montée dans une sellette d'attelage d'un tracteur couplé à la semi-remorque,
dans laquelle des renforts sous la forme de nervures (2) et de reliefs (3) sont formés dans une zone d'une surface pliée monolithique de la plaque de glissement (1),
**caractérisée en ce que**
la plaque de glissement (1) est formée par une zone de surface profilée de manière appropriée, de préférence en acier, de manière à former
des nervures circonférentielles (2) s'étendant sensiblement symétriquement par rapport à une direction longitudinale de la semi-remorque et sur les deux côtés d'une surface centrale et sensiblement plate, et
un relief longitudinal central (3) réalisé dans la surface centrale et sensiblement plate, dans laquelle le relief longitudinal (3) s'étend exactement à travers la surface et constitue l'axe de symétrie des nervures (2), ledit relief (3) s'étendant sensiblement parallèlement à la direction longitudinale de la semi-remorque par le centre (4) de la surface et dans une zone du pivot d'attelage (5), de sorte qu'à l'endroit où se trouve le pivot d'attelage (5), le relief longitudinal (3) est aplati.

2. La semi-remorque selon la revendication 1, **dans laquelle** les nervures circonférentielles (2) et/ou le relief longitudinal central (3) sont réalisés dans la surface avec des méthodes de formage plastique, de préférence par hydroformage.

3. La semi-remorque selon la revendication 1 ou 2, **dans laquelle** les nervures circonférentielles (2) sont elliptiques.

4. La semi-remorque selon la revendication 1 ou 2, ou 3, **dans laquelle** un lubrifiant est placé dans le relief longitudinal (3) pour réduire le frottement entre la plaque de glissement (1) et/ou entre le pivot d'attelage (5) et la sellette d'attelage du tracteur.
